# EUROPEAN PATENT APPLICATION

(11) **EP 4 663 023 A1**
(43) Date of publication of application: **17.12.2025**
(21) Application number: 24181956.4
(22) Date of filing: 13.06.2024
(51) Int. Cl.: A22C 7/00, A22C 29/02, B30B 9/30, F25D 31/00

(54) **COMPACTOR SYSTEM AND METHOD FOR COMPACTING PRODUCTS**

(71) Applicant: Carsoe Seefood ApS, 9220 Aalborg Øst (DK)
(72) Inventor: BRØCHNER LIND, Christian, 9220 Aalborg Øst (DK); JUELSEN, Erik, 6520 Kristiansund (NO); HOLM, Asger Villads, 9220 Aalborg Øst (DK)
(74) Representative: Patrade A/S

(57) **Abstract**

The present invention relates to a compactor system (100) for compacting associated products, preferably into blocks, and preferably said associated products being seafood products, said system comprising: a compacting unit (200), said compacting unit comprising compacting means (300), such as a plate or spade, preferably said system comprising two compacting means, a horizontal drive unit (400), at least one motor (500), preferably a gear motor, more preferably two gear motors, a receiving section (600), preferably a plurality of receiving sections, for receiving the associated products to be compact, a control panel (700), and preferably a rail (800) whereon the compacting unit is arranged and moved on.

Furthermore, the invention relates to a method of compacting a product.

## Description

### FIELD OF THE INVENTION

The present invention relates to a compactor system, such as a compactor module, for compacting associated products into blocks, preferably said associated products being seafood products, said system comprising: a compacting unit, said compacting unit comprising compacting means, such as a plate or spade, preferably said system comprising two compacting means, a horizontal drive unit, at least one motor, preferably a gear motor, more preferably two gear motors, a receiving section, preferably a plurality of receiving sections, for receiving the associated products to be compacted, a control panel, and preferably a rail, whereon the compacting unit is arranged and moved on. Furthermore, the invention relates to a method of compacting a product.

Furthermore, the invention relates to a method of compacting a product, wherein said method comprises the steps of: providing a compactor system, wherein said compactor system comprises: a compacting unit comprising compacting means, such as plates or spades, and a plurality of receiving sections for receiving products, preferably said receiving section being arranged in a row, filling in products into the receiving sections, preferably filling up the receiving sections to substantially the top edge of the section(s), compacting the products in one or more first receiving section by: moving in a vertical downwards direction the compacting means, providing a push force from the top of the receiving sections, said push force being provided from compacting means, moving in a vertical upwards direction the compacting means, when the compacting is performed, moving the compacting unit in a horizontal direction, stopping the horizontal movement of the compactor unit, preferably repeating at least the steps of compacting the product in receiving section and moving in a horizontal direction until a determined number of receiving sections filled with products are compacted.

### BACKGROUND OF THE INVENTION

Within the area of compacting a product, preferably more specifically compacting products into blocks many solutions are available. However, the known solutions, systems and methods used today do often have a need and requirement of manual work, thereby have a need for a worker, such as an operator.

The manual work may be of varying kinds. Though, one thing which all the kinds of manual works have in common is that the work is hard, troublesome and often very problematic.

The work to be performed by the worker is often not only a physically hard work, but also an unsafety work and work in inconvenient positions, etc.

This often leads to inferior working environment and in the end, it may lead to workers being abrade due to their work.

Furthermore, the known solutions often have a high rate of damaging and injuring the products being compacted, and thereby have a low reliability and low efficiency which leads to a high uncertainty and a low economic efficiency.

Hence, an improved solution, such as an improved system for compacting products and an improved method of compacting products would be advantageous, and in particular a more efficient, reliable, economically and convenient solution would be advantageous.

### OBJECT OF THE INVENTION

It is an object of the present invention to provide an alternative to the prior art.

In particular, it may be seen as an object of the present invention to provide a compactor system and compacting method that solves the above mentioned problems by being automatic.

### DESCRIPTION OF THE INVENTION

Thus, the above described object and several other objects are intended to be obtained in a first aspect of the invention by providing a compactor system for compacting associated products, preferably said associated products being seafood products, such as shrimps or the like,
said system comprising:
- a compacting unit, said compacting unit comprising:
   - compacting means, such as a plate or spade, preferably said system comprising two compacting means,
- a horizontal drive unit,
- at least one motor, preferably a gear motor, more preferably two gear motors,
- a receiving section, preferably a plurality of receiving sections, for receiving the associated products to be compacted,
- a control panel, and
- preferably a rail, whereon the compacting unit is arranged and moved on.

The invention is particularly, but not exclusively, advantageous for providing an automated system for compacting/compressing products into receiving sections, preferably compacting the products into blocks.

The automatization provides a more optimal and reliable compaction, both providing a system wherein the products are in a lower risk for being injured during the compression, and at the same time providing a system, wherein the most possible quantity amount of products is being compacted.

Due to the automatization, the system may provide the advantages to save a lot of manual manpower, both being more economically and providing a safer working space for the workers.

Furthermore, the system allows to provide a strong reliable block of compressed products. The products can be of any kind organic as well as non-organic. However, the preferred product is seafood products.

The blocks of product are easy to store, move around, transport, etc.

The blocks may be frozen blocks and/or water/liquid may be added to provide the blocks depending on the products to be compacted.

Moreover, the compacting system is ideal for being mounted on, in or in connection with an already exiting freezer system.

In the context of the present invention, a "compactor system" may be understood as a compactor module or the like.

In the context of the present invention, "compacting" may be understood as compressing or the like.

In the context of the present invention, a "receiving section" may be understood as a station, slots or the like.

In the context of the present invention, "products" may be understood as any suitable product for being compacted. The product can be organic and/or non organic.

The preferred products to be compacted may be food product, especially seafood products, such as shrimps.

Also preferred products to be compacted may be grain and corn products.

However, the specific type of product should not necessarily be seen as limited to the invention.

Within the invention it must be understood that the drive unit for horizontal movement (the horizontal drive unit) may at least be:
- a separate part/unit, such as not being in directly connection with the compacting unit,
- a part/unit connected to the compacting unit, and/or
- an integrated part/unit of the compacting unit.

The preferred embodiment of the horizontal drive unit and the illustrated embodiment is the drive unit being connected to the compacting unit, though being a separate unit. Thereby it should be understood that the arrangement and connecting of the drive unit should not necessarily be seen as a limitation to the invention.

In one embodiment of the invention, the compactor system comprises one or more worm gears, such as a first and a second worm gear.

A first worm gear may be driven by a motor for providing a vertical movement.

A second worm gear may be driven by a motor for providing a horizontal movement.

In one embodiment of the invention, the compactor system comprises a frame, such as a base or bottom frame.

The embodiment is particularly, but not exclusively, advantageous for providing frame of the system, wherein the parts/units/features of the system can be mounted on, directly or indirectly.

Furthermore, the frame may provide a more reliable and stable system.

In one embodiment of the invention the compactor system comprises an electrical panel, such as an electrical cabinet, comprising electrical components, such as PLC and frequency inverters.

In one embodiment of the invention, the compactor system comprises a pneumatic cabinet, comprising pneumatic components, the pneumatic cabinet may be arranged below the electrical cabinet.

An HMI may be arranged to the electrical cabinet, for controlling the compactor.

In one embodiment of the invention the system can take at least two positions:
- a non-operation position, and
- an in-operation position.

In one embodiment of the invention, the compactor system comprises an energy chain, preferably arranged below the horizontal drive unit, and/or preferably connects the shrimp compactor to the electrical cabinet and/or pneumatic cabinet.

In one embodiment of the invention the compactor system comprises:
- a first motor for vertical movement of the compacting means, and
- a second motor for horizontal movement of the compacting unit.

The embodiment is particularly, but not exclusively, advantageous for providing two separate motors for the two types of movements: horizontal and vertical.

Separating the motors provides a more reliable system, more optimal movements, and a better control of the movement, such as controlling the movements separately.

In one embodiment of the invention, the compactor system comprises a plurality of receiving sections:
- the receiving sections being at least substantially rectangular prisms.

The embodiment is particularly, but not exclusively, advantageous for providing receiving sections having an optimal shape for being compacted/compressed from the top of the sections, such that the entire section is effected by the compaction.

In one embodiment of the invention, the receiving sections are being arranged in a row.

The embodiment is particularly, but not exclusively, advantageous for providing a compacting system, wherein a compacting unit can easily be moved towards/along all the receiving sections. When the receiving sections are arranged in a row, the compacting unit can be moved in one horizontal line and reach all the sections.

In one embodiment of the invention, the receiving sections are open ended.

The embodiment is particularly, but not exclusively, advantageous for providing a receiving section allowing a compactor unit to push down from above with compacting means on the product placed in the receiving section. Thereby preferably providing blocks of compressed/compacted products.

In the context of the present invention, "open ended" may be understood as a receiving section being open in one or more end, preferably in one end, and preferably in the upper/top end of the receiving section.

In one embodiment of the invention:
- the compactor unit further comprises:
   - a pneumatic cylinder, preferably two, arranged in connection with the compacting means,
   and/or
- the horizontal drive unit comprises:
   - a sprocket, and
   - a guide wheel or a guide block.

The embodiment is particularly, but not exclusively, advantageous for providing a system with optimal, effective and reliable units, providing smooth movements.

In one embodiment of the invention, the system further comprises:
- a first sensor for at least monitoring:
   - the torque of a motor, and/or
   - the downwards push force provided by a motor.

In one embodiment of the invention:
- the first sensor is adapted to monitor a motor and/ a gear arrangement, such as to determine when the compacting means engage with the associated product,
- preferably, when the monitoring indicates contact to the associated product, the push speed is slowed, and
- preferably, when the monitoring reaches a predetermined value indicating a push force, the movement of the compacting means are stopped.

The embodiments are particularly, but not exclusively, advantageous for securing compaction/compression of the products to be compacted. The sensor ensuring that the products are in a lower risk for being injured during compression, and at the same time providing a system.

In one embodiment of the invention the compactor system further comprises:
- one or more vibrator means for further compacting the associated product.

The embodiment is particularly, but not exclusively, advantageous for providing a compacting system, wherein the compaction is made even more optimal and compact due to the possibility of also applicating vibration to the products.

In one embodiment of the invention, the compactor system further comprises:
- a rack and pinion set for leading a horizontal movement of the compactor system,
- preferably, the horizontal movement is hydraulic.

In one embodiment of the invention, the system further comprises:
- a second sensor and/or an encoder, for providing a horizontal stopping position of the compactor unit in relation to the receiving section(s),
   - preferably the second sensor and/or is adapted to search for a detection means arranged in relation to the receiving section(s).

The embodiment is particularly, but not exclusively, advantageous for providing a reliable system, wherein the compacting unit is ensured to be positioned accurately, thereby with high precision, above the receiving section with products to be compacted.

In one embodiment of the invention the control panel comprises:
- starting means, preferably a start button, and/or
- pausing means, preferably a pause button, and/or
- stopping means, preferably a stop button, and/or
- emergency means, preferably one or more emergency buttons, preferably being arranged on both sides of the compactor system.

The embodiment is particularly, but not exclusively, advantageous for being able to manually control the system.

More detailed information of the features of the control panel and the positions/modes of the system:

### Start/Stop Button:

When start is pressed, the compactor work cycle is initiated. If the stop button is pressed, the compactor will pause in its current position. When started is will resume normal operation where it was paused.

### Return to Home Position (Out of Operation position):

If the stop button is pressed and the compactor is paused, the return button can be pressed after which the compactor returns to its out of operation position. This is used if there is not enough product to fill all stations.

### Move to opposite end:

When this button is pressed, the compactor will move to the opposite end of the freezer. When the compactor reaches the end stop, it will stop and wait for the operator to push the start button.

### Directional Switch:

Determines the direction the compactor travels when in auto mode. Used if the operator decides to fill the freezer from the opposite end than the Out of Operation position.

### Manual/Auto mode switch:

During normal operation, the switch is set to auto, during which it will perform the functions described in section 2. If the operator wishes to operate the compactor manually, he can do so by switching the button to manual.

### Up/down for compaction units (only in manual mode):

If operated in manual mode, the operator can use this button to move the compaction units up and down. The button only works if the correct horizontal position above a freezer plate is reached.

### Left/right for horizontal unit (only in manual mode):

If operated in manual mode, the compactor can be moved horizontally between stations by using this button. If the button is pressed once, the compactor will move to the next station and position itself correctly. If the button is pressed and held, the compactor will continue to move horizontally until the button is released (or the end stop is reached). When released, the compactor will automatically search for the next station and position itself.

### Emergency Stop:

The emergency stop button stops all motors if activated.

### Emergency Reset:

Resets the emergency circuit.

### Main Power Switch:

The main power switch is located on the electrical panel box.

In one embodiment of the invention, the compactor system further comprises:
- a freezer system,
   - wherein receiving section(s) are arranged in or as a part of the freezer, and
- preferably a hydraulic cylinder for moving the freezer in a vertical direction.

The embodiment is particularly, but not exclusively, advantageous for providing the possibility of freezing the compacted receiving sections, such that the compacted products in the receiving section are ending up a frozen block of product.

It should be noted that water may be added before freezing to binding even more the product and strengthen the frozen block of products.

In a second aspect, the invention further relates to a method of compacting a product, such as seafood products, wherein said method comprises the steps of:
- providing a compactor system, wherein said compactor system comprises:
   - a compacting unit comprising:
      - compacting means, such as plates or spades, and
   - a plurality of receiving sections for receiving products, preferably said receiving section being arranged in a row,
- filling in products into the receiving sections, preferably filling up the receiving sections to substantially the top edge of the section(s),
   - said filling being done either manually and/or automatically,
- compacting the products in one or more first receiving section by:
   - moving the compacting means in a vertical downwards direction,
   - providing a push force from the top of the receiving sections, said push force being provided from compacting means,
   - moving the compacting means in a vertical upwards direction, when the compacting is performed,
- moving the compacting unit in a horizontal direction,
- stopping the horizontal movement of the compactor unit,
- preferably repeating at least, the steps of compacting the product in receiving section and moving in a horizontal direction until a determined number of receiving sections filled with products are compacted,
wherein the steps of the method can be executed in any order and/or executed simultaneously.

The second aspect of the invention is particularly, but not exclusively, advantageous for providing a manufacturing method for providing an automated method for compressing products into receiving sections and making blocks of products.

The automatization provides a more optimal and reliable compaction, both providing a method wherein the products are in a lower risk for being injured during compression, and at the same time providing a method, wherein the most possible quantity amount of products is being compacted.

Due to the automatization, the method may provide the advantages to safe manual manpower, both being more economically and providing a safer working space for the workers.

Furthermore, the method allows to provide a strong reliable block of compressed products.

### Moreover, the compacting method is ideal for being connected to a freezing method for freezing the compacted block.

In one embodiment of the invention the method further comprises the step of:
- vibrating the product in the receiving section(s), preferably while compacting or after compacting.

The embodiment is particularly, but not exclusively, advantageous for providing a compacting step, wherein the compaction of product is made even more optimal and compact due to the possibility of also applicating vibration to the products.

In one embodiment of the invention, the method after the compacting step further comprises the step of:
- filling in additional product upon the already compacted product in the one or more receiving sections,
- compacting the products by providing a push force from the top of the receiving sections.

The embodiment is particularly, but not exclusively, advantageous for providing compaction of the most possible quantity amount of products.

In one embodiment of the invention a starting position of the compactor is where the compactor means is arranged at an end of the system.

In one embodiment, when a number of predetermined receiving sections have been compacted, the compactor unit has moved horizontally towards a second end of the compacting system, and
- the compacter unit is arranged to start a new compressing round starting from a second end moving towards the first end, or
- the compactor unit returns to its starting position in the first end.

The embodiment is particularly, but not exclusively, advantageous for providing a method, wherein a new round of compaction can be made more or less directly after one previously round of compaction has been ended.

In one embodiment of the invention the method further comprises the step of:
- monitoring a torque and/or a push force of a motor and/or a gear arrangement driving the compactor means, while compacting, with a first sensor,
- determining when the compacting means engages with the products in the receiving section(s),
- slowing down the push speed or push force when the monitoring indicates engagement,
- stopping the compacting, when the monitoring reaches a predetermined value, said predetermined value preferable being a push force.

In one embodiment of the invention, the method further comprises the step of:
- activating a second sensor and/or an encoder, arranged on the compactor unit, and with said sensor searching for a detection means arranged in relation to the receiving section(s), such as to provide a horizontal stopping position of the compactor unit, wherein the stopping position of the compactor unit is provided in relation to the receiving section(s).

In one embodiment of the invention, the method further comprises the step of:
- filling in water or other liquid into the receiving section(s).

In one embodiment of the invention, the method further comprises the step of:
- freezing the compacted product in receiving section(s), preferably into frozen blocks.

In one embodiment of the invention, the method further comprises the step of:
- releasing the frozen products in receiving section(s).

The embodiments are particularly, but not exclusively, advantageous for providing a method wherein the compacted products can be made into frozen blocks of product. The frozen blocks of product are easy to store, move around, transport, etc.

The first and second aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1 illustrates a 3D drawing of a compactor system.
Figure 2 illustrates a compactor system from the side.
Figure 3a-b illustrate 3D drawings of a compacting unit on a system.
Figure 4 illustrates a 3D drawing of a compacting unit.
Figure 5a-c illustrate 3D drawings of separate parts of a compacting unit.

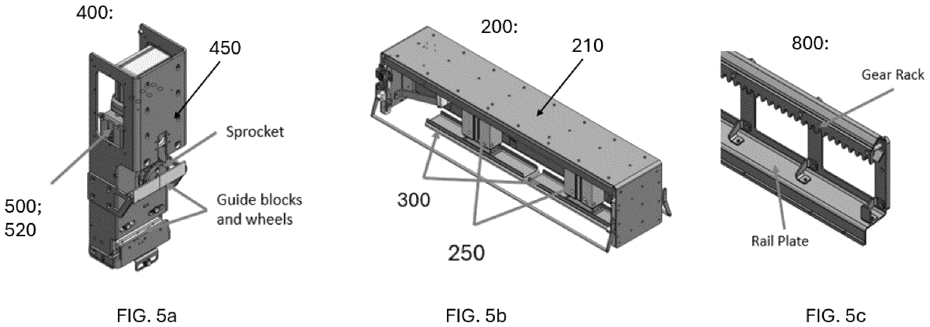

   Figure 5a illustrates a horizontal drive unit of a compacting unit.
   Figure 5b illustrates a top portion of a compacting unit.
   Figure 5c illustrates a rail of a compacting system.

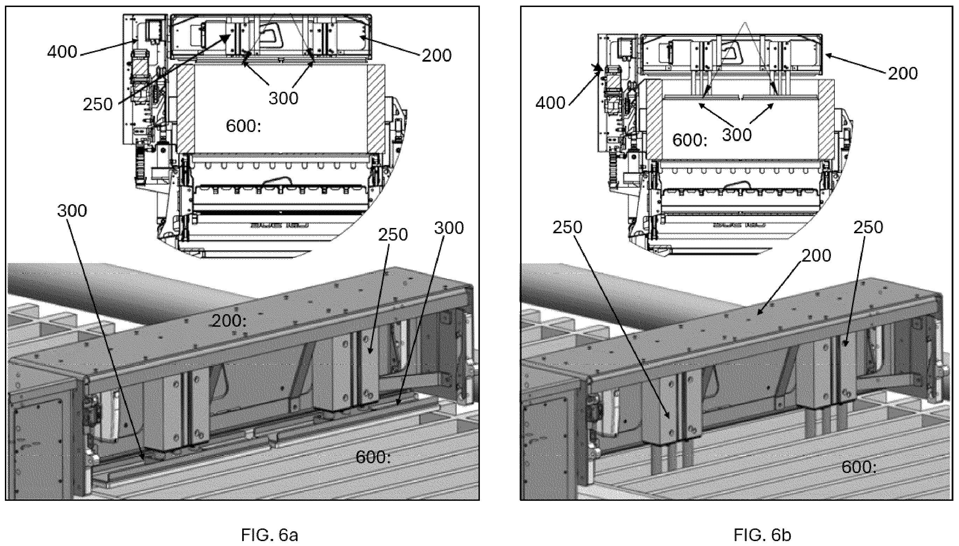

Figure 6a illustrates compacting means being above receiving sections.
Figure 6b illustrates compacting means compressing into a receiving section.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

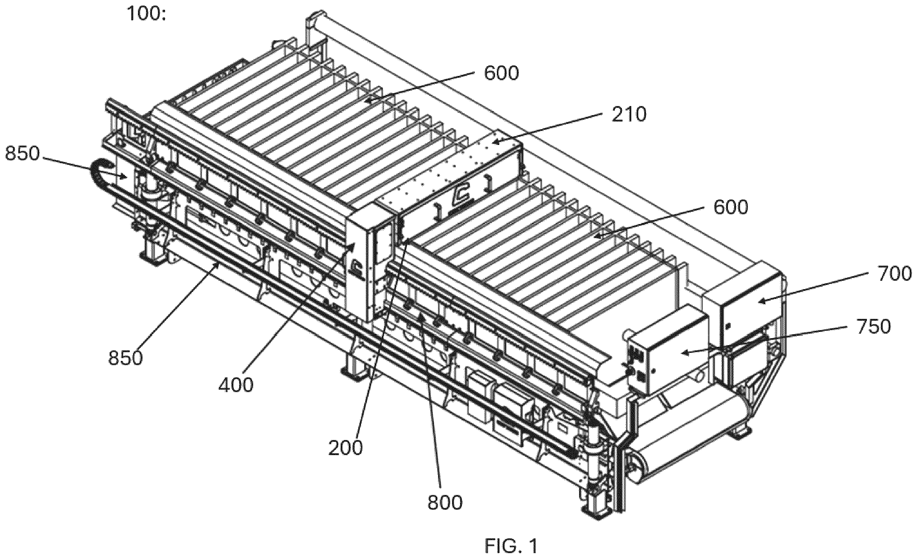

FIG 1 illustrates a 3D drawing of a compactor system.

The compactor system 100 of FIG 1 is a compactor system for compacting associated products, preferably into blocks, and preferably said associated products being seafood products, such as shrimps or the like, said system comprising:
- a compacting unit 200, said compacting unit comprising:
   - compacting means 300, such as a plate or spade 300, preferably said system comprising two compacting means 300 (not directly shown I FIG. 1, see FIG. 6),
- a horizontal drive unit 400,
- at least one motor 500, preferably a gear motor, more preferably two gear motors,
- a receiving section 600, preferably a plurality of receiving sections 600, for receiving the associated products to be compacted,
- a control panel 700, and
- a rail 800, preferably whereon the compacting unit is arranged and moved on,
- a frame 850, such as a base or bottom frame.

In FIG. 1 the embodiment of the invention comprises a plurality of receiving sections 600, wherein the receiving sections being at least substantially rectangular prisms, being arranged in a row and being are open ended 650.

Moreover, in FIG. 1 the embodiment of the invention comprises an electrical panel 750, such as an electrical cabinet, comprising electrical components, such as PLC and frequency inverters. An HMI may be mounted to the electrical cabinet, for controlling the compactor. On top of the electrical cabinet a light beacon may be arranged (not shown).

The compactor system 100 illustrated in FIG. 1 has a preferred capacity, wherein the compactor can perform the compaction on a 32 station V16 freezer in approximately 12 minutes.

It must be understood that this is only one embodiment and one capacity of the invention. This should therefore not be seen as a limitation to the invention.

The compactor system 100 may comprise one or more vibrator means for further compacting the associated product (not shown).

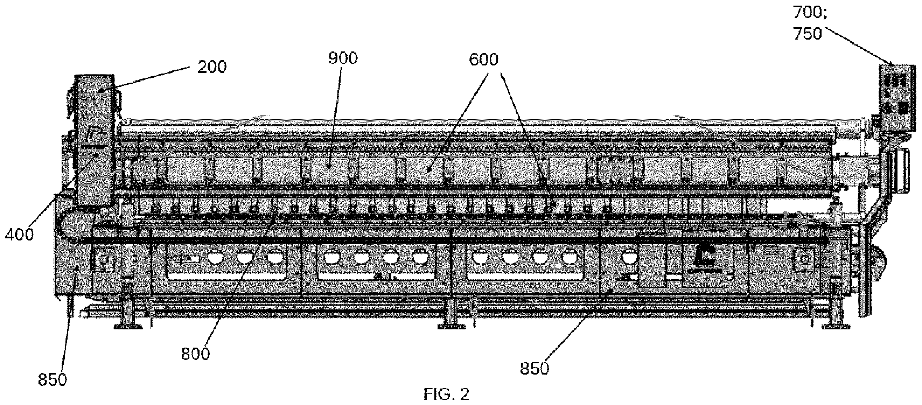

FIG 2 illustrates a compactor system 100 from the side.

The system illustrated in FIG. 2 corresponds to the system illustrated and described in FIG. 1.

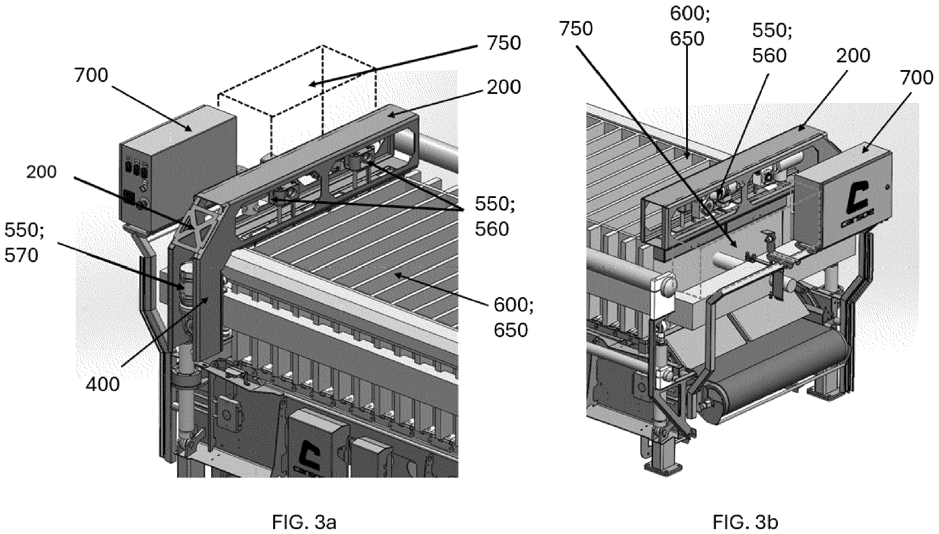

FIG 3a-b illustrate 3D drawings of a compacting unit 200 on a compacting system 100.

In FIG. 3a-b the compactor system comprises two worm gears 550.
- A first worm gear 560 for providing a vertical movement.
- A second worm gear 570 for providing a horizontal movement.

Furthermore, in FIG. 3a-b is illustrated a control panel 700 and an electrical panel 750.

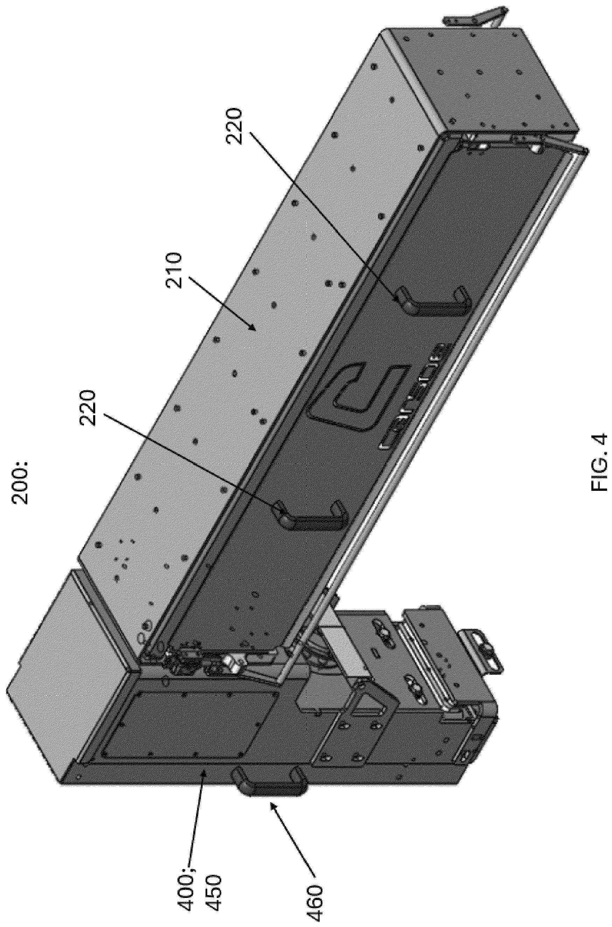

FIG 4 illustrates a 3D drawing of a compacting unit 200, comprising a horizontal drive unit 400.

Moreover in FIG. 4 it is illustrated that the horizontal unit 400 has a case 450, and the compacting means of the compacting unit 200 are also in a case 210.

Furthermore, handles 220, 460 are provided on the casings 210, 450, such as to allow an operator to open the casings.

As illustrated, the:
- handles 220 may be arranged on the compacting unit, and/or
- handles 460 may be arranged on the horizontal drive unit.

FIG 5a-c illustrate 3D drawings of separate parts of a compacting unit 200.
- FIG 5a illustrates a horizontal drive unit 400 of a compacting unit 200 comprising a gear motor 500,520 for horizontal movement, a sprocket, guide blocks and wheels.
- FIG 5b illustrates a top portion of a compacting unit 200, such as a vertical compacting unit 200, comprising two spades 300 being the compacting means 300, and two pneumatic cylinders 250 for providing a vertical movement of the spade 300.
- FIG 5c illustrates a horizontal rail 800 of a compacting system 100 comprising a rail plate and a gear rack.

Moreover, an emergency bar is preferably placed on both sides of the compactor unit 200 (not shown). Activating the emergency bar immediately stops both the vertical and horizontal worm gears. When the hazard is cleared, the emergency circuit is reset by a reset button. An emergency button should also be arranged at the electrical cabinet.

FIG 6a illustrates compacting means 300 being above receiving sections 600 and not (yet) lowered in a vertical direction for compacting, and FIG 6b illustrates compacting means 300 being lowered in a vertical direction by cylinders 250 and compressing the products in a receiving section 600.

One example of an overall work cycle of compression may be as following: (The examples should not be understood as limiting the invention)

The work cycle comprising:
- Horizontal positioning
- Vertical compaction

Horizontal positioning - FIG 6a:
The compactor system 100 within the invention is in a preferred embodiment used for compacting raw, uncooked shrimp into half-blocks within a V16 vertical freezer.

This increases the sturdiness and quality of the frozen block, and spares a worker, such as an operator, of the physical task of compacting the shrimps manually.

The compacting may be performed twice, with the freezer 900 being completely filled between each compacting cycle, such as a first compaction and a second compaction. The only difference in the working cycle between the two compactions may be the pressure at which they are performed. The first compaction may be performed at approx. 0.4 MPa and the second compaction may be performed at approx. 0.2 MPa. After the second compaction, the freezer is topped off with shrimp, but not necessarily compacted.

During normal operation, the compactor system 100 will be working in automatic mode, where the compactor system starts out positioned at its default home position ('out of operation') located at the opposite end of the electrical panel 750. After the receiving section 600 has been filled with products to be compacted the work cycle is initiated. The work cycle starts with the compactor unit 200 being positioned at its home position. When the working cycle is initiated, the compactor unit 200 moves horizontally. The horizontal drive motor 500,520 is preferably equipped with an encoder which uses stored positional data on all receiving sections 600 to position the compactor unit 200 correctly in relation to each section.

A first sensor mounted to the compactor unit 200 detects each receiving section 600, when moving by it, thereby checking the exact position of the compactor unit 200 in relation to each receiving section 600, every time the compactor unit 200 passes. After positioning itself 200 correctly over a receiving section 600, a vertical compaction is initiated.

Vertical Compaction - FIG. 6b:
After the horizontal position has been reached, the compacting is initiated.

The cylinders 250 are ejected in a vertical downwards direction and thereby the compacting means 300 are ejected towards the products in a receiving section 600.

The exact pressure provided by the compacting means 300 (and thereby force applied to the shrimp) can be adjusted, preferably but not limited to a range within 0.2 MPa to 0.5 MPa corresponding to an applied force of approx. 400N to 1000N.

After compacting, the cylinders 250 are retracted and thereby the compacting means 300 are retracted and the compactor unit 200 moves horizontally to the next receiving section 600.

When all receiving sections 600 have been compacted, and the compactor unit 200 has reached the opposite end of the system 100 or the freezer 900, from where it started, it will activate an inductive sensor placed at either end of the system 100 or the freezer 900, there it awaits to do one of two things:
1. Initiate a second compaction sequence.
   The block of products may need to be compacted twice, meaning refilling the sections 600 after the first compaction, and then start the automatic compaction again.
2. Verify its position before the freezer 900 can be turned on (freezing initiated). If the blocks have been compacted twice, and the compactor unit 200 is located at the end position, an operator may verify visually, that the compactor unit 200 is at the end position before the freezer 900 is allowed to start the freezing process.

Within the invention, there is a possibility of a manual mode, though it is preferred to only do automatic mode(s):
The manual mode allows an operator to perform additional compactions on certain blocks if he deems it necessary. It also allows the operator to move the compactor horizontally to a specific block.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### REFERENCE LIST

Compactor system (100)
Compacting unit (200)
Case (210)
Pneumatic cylinder (250)
Handle on compacting unit 220
Compacting means (300), such as a plate or spade
Horizontal drive unit (400)
Case (450)
Handle on drive unit (460)
Motor (500),
First motor (510) for vertical movement
Second motor (520) for horizontal movement
Worm gear (550)
First worm gear (560) for vertical movement
Second work gear (570) for horizontal movement
Receiving section (600)
Open-end (650)
Control panel (700)
Electrical panel (750)
Rail (800)
Frame (850)
Freezer system (900)
Hydraulic cylinder (950)

## Claims

1. A compactor system (100) for compacting associated products, preferably into blocks, and preferably said associated products being seafood products, such as shrimps or the like,
said system comprising:
- a compacting unit (200), said compacting unit comprising:
- compacting means (300), such as a plate or spade, preferably said system comprising two compacting means,
- a horizontal drive unit (400),
- at least one motor (500), preferably a gear motor, more preferably two gear motors,
- a receiving section (600), preferably a plurality of receiving sections, for receiving the associated products to be compacted,
- a control panel (700), and
- preferably, a rail (800), whereon the compacting unit (200) is arranged on.

2. A compactor system (100) according to claim 1, wherein the compactor system comprises:
- a first motor (500) for vertical movement of the compacting means (300), and
- a second motor (500) for horizontal movement of the compacting unit (200).

3. A compactor system (100) according to one or more of the preceding claims, wherein the compactor system comprises a plurality of receiving sections (600):
- the receiving sections (600) being at least substantially rectangular prisms, and/or
- the receiving sections (600) being arranged in a row, and/or
- the receiving sections (600) are open ended, preferably at the top part.

4. A compactor system (100) according to one or more of the preceding claims, wherein:
- the compactor unit (200) further comprises:
- a pneumatic cylinder (250), preferably two, arranged in connection with the compacting means,
and/or
- the horizontal drive unit (400) comprises:
- a sprocket, and
- a guide wheel or a guide block.

5. A compactor system (100) according to one or more of the preceding claims, wherein the system further comprises:
- a first sensor for at least monitoring:
- the torque of a motor, and/or
- the downwards push force provided by a motor.

6. A compactor system (100) according to one or more of the preceding claims, wherein the compactor system further comprises:
- one or more vibrator means for further compacting the associated product.

7. A compactor system (100) according to one or more of the preceding claims, wherein the system further comprises:
- a second sensor and/or an encoder, for providing a horizontal stopping position of the compactor unit (200) in relation to the receiving section(s) (600),
- preferably the second sensor is adapted to search for a detection means arranged in relation to the receiving section(s) (600).

8. A compactor system (100) according to one or more of the preceding claims, wherein the control panel (700) comprises:
- starting means, preferably a start button, and/or
- pausing means, preferably a pause button, and/or
- stopping means, preferably a stop button, and/or
- emergency means, preferably one or more emergency buttons, preferably being arranged on both sides of the compactor system.

9. A compactor system (100) according to one or more of the preceding claims, wherein the compactor system further comprises:
- a freezer system (900),
- wherein receiving section(s) (600) are arranged in or as a part of the freezer, and
- preferably one or more hydraulic cylinder (950) for moving the freezer in a vertical direction.

10. A method of compacting a product, such as seafood products, wherein said method comprises the steps of:
- providing a compactor system (100), preferably a compactor system according to one or more of claim 1-9, wherein said compactor system comprises:
- a compacting unit (200) comprising:
- compacting means (300), such as plates or spades, and
- a plurality of receiving sections (600) for receiving products, preferably said receiving section being arranged in a row,
- filling in products into the receiving sections (600), preferably filling up the receiving sections to substantially the top edge of the section(s),
- said filling being done either manually and/or automatically,
- compacting the products in one or more first receiving section (600) by:
- moving the compacting means (300) in a vertical downwards direction,
- providing a push force from the top of the receiving sections (600), said push force being provided from compacting means (300),
- moving the compacting means (300) in a vertical upwards direction, when the compacting is performed,
- moving the compacting unit (200) in a horizontal direction,
- stopping the horizontal movement of the compactor unit (200),
- preferably repeating at least, the steps of compacting the product in receiving section and moving in a horizontal direction until a determined number of receiving sections filled with products are compacted,
wherein the steps of the method can be executed in any order and/or executed simultaneously.

11. A method for compacting according to claim 10, wherein the method further comprises the step of:
- vibrating the product in the receiving section(s) (600), preferably while compacting or after compacting.

12. A method for compacting according to one or more of claim 10-11, wherein the method after the compacting step further comprises the step of:
- filling in additional product upon the already compacted product in the one or more receiving sections (600),
- compacting the products by providing a push force from the top of the receiving sections.

13. A method for compacting according to one or more of claim 10-12, wherein:
- a starting position of the compactor is where the compactor unit (200) is arranged at an end of the system (100).

14. A method for compacting according to one or more of claim 10-13, wherein the method further comprises the step of:
- monitoring a torque and/or a push force of a motor and/or a gear unit driving the compactor means (300), while compacting, with a first sensor,
- determining when the compacting means (300) engages with the products in the receiving section(s) (600),
and
- slowing down the push speed or the push force when the monitoring indicates engagement, and/or
- stopping the compacting, when the monitoring reaches a predetermined value.

15. A method for compacting according to one or more of claim 10-14, wherein the method further comprises the step of:
- activating a second sensor and/or an encoder, arranged on the compactor unit (200), and with said sensor searching for a detection means arranged in relation to the receiving section(s) (600), such as to provide a horizontal stopping position of the compactor unit (200), wherein the stopping position of the compactor unit (200) is provided in relation to the receiving section(s) (200).
